# EUROPÄISCHE PATENTSCHRIFT

(11) **EP 0 446 471 B1**
(45) Veröffentlichungstag und Bekanntmachung des Hinweises auf die Patenterteilung: **15.03.1995**
(21) Anmeldenummer: 90124938.3
(22) Anmeldetag: 20.12.1990
(51) Int. Cl.: B01D 67/00, B01D 69/00, B01D 29/48

(54) **Verfahren zur Herstellung einer Membran zur Mikrofiltration, Ultrafiltration, Pervaporation od. Umkehrosmose von Suspensionen, Emulsionen oder zur Gastrennung**
Process for making a microfiltration, ultrafiltration, pervaporation or reverse osmosis membrane for suspensions, emulsions or gas separation
Procédé de fabrication d'une membrane de microfiltration, d'ultrafiltration, de pervaporation ou d'osmose inverse de suspensions, d'émulsions ou de séparation de gaz

(30) Priorität: 21.01.1990 DE 4001654; 17.07.1990 DE 4022738
(43) Veröffentlichungstag der Anmeldung: 18.09.1991
(60) Teilanmeldung: 94113628.5
(73) Patentinhaber: Altenburger Electronic GmbH, D-77956 Seelbach (DE)
(72) Erfinder: Siegfried, Hans-Günther, W-7633 Seelbach (DE)
(74) Vertreter: Eder, Eugen, Dipl.-Ing.

(56) Entgegenhaltungen:
- EP-A- 0 213 941
- EP-A- 0 319 893
- DE-A- 2 500 990
- DE-A- 3 522 725
- DE-A- 3 817 578
- GB-A- 926 138
- NL-C- 80 010
- US-A- 4 693 835
- PATENT ABSTRACTS OF JAPAN, Band 8, Nr. 11 (C-205)[1448], 18. Januar 1984;& JP-A-58 180 211 (SHION K.K.K.K.)

## Beschreibung

Die Erfindung betrifft ein Verfahren zur Herstellung einer Membran zur Mikrofiltration, Ultrafiltration, Pervaporation oder Umkehrosmose von Suspensionen, Emulsionen oder zur Gastrennung mit den Merkmalen des Oberbegriffs des Patentanspruches 1.

Es sind Verfahren und Filtervorrichtungen zur Mikrofiltration von Partikeln aus Suspensionen oder Gasen unter Verwendung einer rohrförmig aus Draht gewickelten Membran bekannt. Hierbei werden die Membranwindungen unter Vorspannung gewickelt. Das Feed wird unter Druck durch die Membran geführt. Die schlitzförmigen Membranporen zwischen benachbarten Membranwindungen ermöglichen die Trennung der zu filternden Partikel aus dem Feed. Nachteilig ist, daß ein solches Verfahren zur Mikrofiltration nicht das Abtrennen von Partikeln zur Ultrafiltration, die Pervaporation oder die Gas/Gastrennung zuläßt.

Aus der EP-A-0 213 941 ist ein Filterverfahren und ein Filter bekannt, bei dem ein rohrförmiges, aus einem Draht gewickeltes Filter verwendet wird, dessen eine Seite mit einem Halterteil fest verbunden ist, an den sich eine Betätigungsstange anschließt, die durch das Filter geführt ist. Mit der Betätigungsstange kann das rohrförmige gewickelte Filter gedehnt oder zusammengedrückt werden. Das Verändern des Filters dient lediglich dazu, die Porengröße den jeweiligen Gegebenheiten entsprechend zu verändern.

Aus der DE-A-38 17 578 ist ein Verfahren und eine Vorrichtung zur Mikro- und Ultrafiltration sowie zur Umkehrosmose bekannt. Hierbei findet vorzugsweise eine Membran Verwendung, die von einem Rohrkörper aus mit Vorspannung gewickeltem Draht gebildet ist. Diese Membran kann mit einem die Porengröße verringernden, begrenzt elastisch streckbaren Materialauftrag versehen sein. Diese Membran wird in einer Filtrationsvorrichtung verwendet. Der Filtrationsvorgang kann sowohl im Durchflußverfahren mit Querstromeffekt als auch im Deadend-Verfahren durchgeführt werden.

Aus der DE-A-35 22 725 ist eine mit oder ohne Vorspannung aus Draht spiralförmig gewickelte Membran bekannt, die mit einem Materialauftrag versehen ist. Der Materialauftrag kann vor oder nach dem Wickelprozess aufgebracht werden. Er kann aus feinsten, organischen oder anorganischen Partikeln bestehen. Diese können mit ihren kristallinen oder gitterförmigen Strukturen und ihren Zwischenräumen erhöhte und für den speziellen Anwendungsfall geeignete Filterwirkungen ausüben. Als Partikel können Graphit-, Graphitoxid-, Metall-, Metalloxid-, Keramik- und andere Partikel, die allein oder gemeinsam mit einem Trägermaterial (Suspension, z. B. aus Wasser, Fett oder Öl) auf die Drähte oder Fasern aufgebracht oder in die Zwischenräume der Spirale eingebracht und anschließend fest mit der Membran verbunden werden. Die Filterwirkung der Partikel entsteht durch deren Porosität. Nachteilig ist, daß die Herstellung solcher Membrane aufwendig ist. Da die Partikel fest an der Membran angebracht sind, besteht die Gefahr, daß die Durchgänge durch diesen Materialauftrag bei der Filtration verstopft werden und eine Rückflußreinigung nur schwer durchführbar ist. Außerdem wirken die für den Materialauftrag benutzten Partikel nur aufgrund der von ihnen gebildeten Durchlässe, also der entstehenden Porösität, nicht aber aufgrund anderer Wirkungen, wie Affinität zu bestimmten Stoffen oder dergleichen.

Die EP-A-0 319 893 beschreibt ein Verfahren zur Herstellung eines Filters in Form einer Scheibe, wobei die Filterscheibe mit einer die Porengröße bestimmenden Membran fest verbunden ist.

Die GB-A-926 138 beschreibt ein Filter, bei dem Filterrückstände, die zur Verstopfung führen könnten, weitgehenst vermieden werden.

Die US-A-4 693 835 beschreibt ein Filter bei dem das Filter mit einer filterwirksamen Schicht fest überzogen ist.

Der Erfindung liegt die Aufgabe zugrunde, auf einfache Weise die Trenngrenzen dieser bekannten Filtermembranen deutlich zu verringern, damit die Größe der abzutrennenden Teilchen aus einem Feed bis in den Ultrabereich (Mol. Trennbereich) möglich wird und Pervaporation sowie Gas/Gastrennungen, gegebenenfalls unter Verwendung von Composite-Membranen oder Trennmembranen, durchführbar werden.

Die Erfindung löst diese Aufgabe mit den kennzeichnenden Merkmalen des Patentanspruches 1.

Die Erfindung bietet den Vorteil, die Porengröße zwischen benachbarten Windungen einer rohrförmigen Membran einer Filtervorrichtung auf direktem Wege durch Verringerung der Windungsabstände und auf indirektem Wege durch Einlagerung von Feintrennschichten zu verringern. Dadurch gelingt es, in den Ultrafiltrationsbereich zu gelangen und auch Pervaporationen sowie Gas/Gastrennungen durchzuführen. Hierbei wirkt die Feintrennschicht als Filter-, Phasen- oder Gastrennelement, wogegen die rohrförmige Membran im wesentlichen als Stützgerüst mit Mikrofiltrationseigenschaften für die weitergehende Feintrennschicht dient. Somit kann der Durchmesser des Drahtes für die Membranwindungen groß gewählt werden. Die Anwendung hoher Filtrationsdrücke und die Erzielung hoher Filterleistungen werden möglich. Die Feintrennschichten werden von Substanzen gebildet, die im Feed vorhanden sind oder diesem während der Filtration zugesetzt werden. Aufgrund der Querstromwirkung werden diese Substanzen den Poren zur Bildung der Feintrennschicht zugeleitet. Die Feintrennschicht wird dabei in Form der losen Substanzen durch die Querstromwirkung, gegebenenfalls unter laufendem Austausch der Substanzen, aufrechterhalten. Die Feintrennschicht kann porös oder transportaktiv je nach den verwendeten Substanzen ausgebildet werden.

Weitere Ausgestaltungen der Erfindung ergeben sich aus den abhängigen Ansprüchen. Die Erfindung wird nachfolgend anhand eines in der Zeichnung dargestellten Ausführungsbeispieles näher erläutert. In der Zeichnung zeigen:

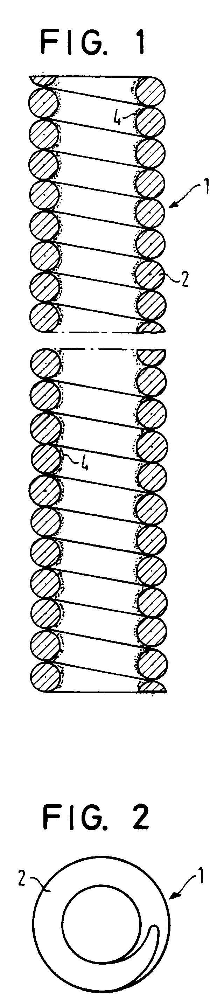

- Fig. 1: einen Vertikalschnitt einer rohrförmigen Membran, die in einer üblichen, nicht dargestellten Filtervorrichtung verwendet ist;
- Fig. 2: eine Draufsicht der Membran nach Fig. 1;
- Fig. 3: eine stark vergrößerte Teilschnittansicht eines Windungsspaltes mit einer mit der Membran lose aufliegenden porösen, oder homogenen, transportaktiven Trennschicht und
- Fig. 4: eine Teilansicht im Schnitt.

Eine übliche, nicht dargestellte Filtervorrichtung weist eine oder mehrere rohrförmige Membrane 1 auf. Hierfür wird ein Draht spiralförmig, vorzugsweise mit großer Vorspannung, gewickelt. Als Drahtmaterial findet Metall, Kunststoff, Glas oder anderes Material Verwendung. Der Drahtquerschnitt kann kreisförmig, oval oder mehreckig sein.

Der Durchmesser, insbesondere des Metalldrahtes, ist so groß gewählt, daß die rohrförmige Membran einen Filtrationsdruck im Mittel- und Hochdruckbereich von 1 bis > 1000 bar standhält.

Die zwischen benachbarten Windungen der Membran 1 entstehenden schlitzförmigen Poren 3 können wegen produktionsbedingter Unebenheiten der Drahtoberfläche nicht unter 0,5 »m reduziert werden. Durch entsprechend hohen axialem Druck auf die Membran 1 können diese Unebenheiten eingeebnet werden. Dadurch ist es möglich, die Porengröße bis auf 1 nm zu reduzieren.

Eine solche Membran mit oder ohne Vorspannung gewickelt, kann zur Filtration eines flüssigen oder gasförmigen Feeds mit einer zugeordneten porösen oder transportaktiven Trennschicht vorgesehen sein.

Zur Bildung der porösen Schicht 4 können anorganische Bestandteile, z. B. Glaspulver bis in den Körnungsbereich von 0,1 »m, Keramikkörper, Metallpulver oder andere pulverförmige Materialien in so geringem Umfang in das Feed eingebracht werden, daß sich in Folge der bei der Filtration herrschenden Querstromwirkung im filterwirksamen Bereich der Poren 3 nur eine Schicht mit ein bis zwei Körnungslagen bilden kann. Die anorganischen Bestandteile können vor dem Einbringen durch Siebung in gewickelten Metallmembranen mit definierter Porengröße sortiert werden.

Bei entsprechend geringer Verteilung der Bestandteile im Feed erfolgt eine Anlagerung nur im engsten Bereich der Abstände der Windungen 2. Der durch die Abstände der Windungen 2 gebildete Porenschlitz 5, der ohne vorgenannte Trennschicht 4 auch größere, scheibenförmige oder stabförmige Partikel permeieren läßt, wird so unterbrochen. Scheibenförmige oder stabförmige Partikel können nicht mehr permeieren.

Die durch den Porenschlitz 5 gebildete, ursprüngliche Porengröße verringert sich - in Abhängigkeit von der Größe der lose eingelagerten Partikel - weiter.

Es ist auch möglich, die Trennschicht 4 durch die in einer Suspension oder einem Aerosol vorhandenen Substanzen zu bilden. Hierfür wird die Membran 1 mit solcher Porengröße benutzt, daß sich vor den Poren 3 durch Ablagerungen der Substanzen eine Trennschicht 4 bildet.

Nach Bildung der Trennschicht 4 kann die Membran 1, z. B. durch eine Mikrometer-Zugvorrichtung, so gedehnt werden, daß die Trennschicht 4 die vergrößerte Pore 3 gerade noch überbrückt.

Durch Dehnung ist eine vergrößerte Pore 3 anzustreben, so daß eine Leistungserhöhung möglich ist.

Da die Filterleistung nicht allein vom Querstrom, sondern auch vom Druck abhängt, kann der die Windungen 2 bildende Draht so stark gewählt werden, daß Filterdrücke von 1 bar bis > 1000 bar möglich werden. Hochdruckapplikationen der vorgenannten Art führen zu nennenswerter Leistungserhöhung und Qualitätsverbesserung des Permeats in Fällen, in denen die poröse Feintrennschicht 4 aus nicht kompressiblem Material besteht (z. B. bereits im Feed enthaltene ungelöste oder ausgefällte Metalle, absorbierende Materialien, wie Aktivkohle, Kieselgur oder Zeolithe oder Katalysatoren, die in Granulatform eingebracht werden).

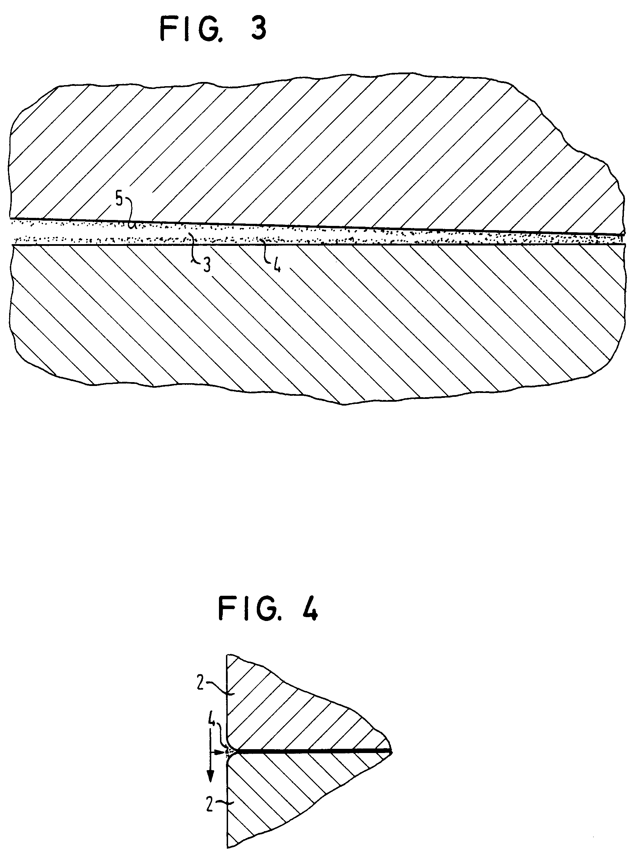

Bei Verwendung eines mehreckigen, z.B. rechteckförmigen Drahtquerschnitts nach Fig. 4 ergibt sich an den Kanten benachbarter Windungen 2 infolge der kleinen Kantenradien ein kleiner Zwickelraum. Dieser kann nur wenige Lagen freier Bestandteile aufnehmen, die sich ständig durch die Wirkung des Längsstromes und des Querstromes des Feeds wirbelnd erneuern. Diese Bestandteile bilden eine Trennschicht 4, deren Poren nicht verstopfen können.

## Patentansprüche

1. Verfahren zur Herstellung einer Membran zur Mikrofiltration, Ultrafiltration, Pervaporation oder Umkehrosmose von Suspensionen, Emulsionen oder für Gastrennungen, bei dem eine aus Draht gewickelte, rohrförmige Membran verwendet wird, dadurch gekennzeichnet, daß axial ein derart hoher Druck auf die Membranwindungen (2) ausgeübt wird, daß die Unebenheiten der Oberflächen der Membranwindungen eingeebnet werden, so daß die zwischen den Windungen befindlichen Poren (3) auf einen filterwirksamen Abstand bis auf 1 nm reduziert werden.

2. Verfahren nach Anspruch 1, dadurch gekennzeichnet, daß die Membranwindungen (2) unter Vorspannung gewickelt werden.

3. Verfahren nach den Ansprüchen 1 oder 2, dadurch gekennzeichnet, daß der Durchmesser des zur Membranherstellung verwendeten Drahtes so groß ist, daß das Feed mit einem Förderdruck von 1 bis >1000 bar durch die Membran bewegbar ist.

4. Verfahren nach einem oder mehreren der vorstehenden Ansprüche, dadurch gekennzeichnet, daß Substanzen zwischen den Membranwindungen (2) lose vor den Membranporen (3) eingebracht werden, die eine Feintrennschicht (4) bilden.

5. Verfahren nach Anspruch 4, dadurch gekennzeichnet, daß die Feintrennschicht (4) von im Feed vorhandenen oder von diesem zugesetzten Substanzen während der Filtration gebildet und aufrechterhalten wird.

6. Verfahren nach Anspruch 4, dadurch gekennzeichnet, daß die Feintrennschicht (4) in Form einer Suspension, eines transparenten Polymerfilmes, miteinander verbundener Mikropartikel einheitlicher Größe oder einer Composite-Membran mit aktiver Trennschicht der Membran zugeleitet und dort abgelagert wird.

7. Verfahren nach Anspruch 4, dadurch gekennzeichnet, daß zur Bildung der Feintrennschicht (4) adsorbierendes Material, z.B. Aktivkohle, Material mit Siebwirkung, z.B. Kieselgur, Material mit definierter Porengröße, z. B. Zeolithe, katalytisch oder enzymatisch wirkende Substanzen, z.B. Platin, Palladium oder angelagerte Enzyme verwendet werden.

## Claims

1. A process for making a microfiltration, ultrafiltration, pervaporation or reverse osmosis membrane for suspensions, emulsions or gas separation, in which a tubular membrane of coiled wire is used, characterized in that such a high pressure is exerted axially on the membrane windings (2) that the unevennesses in the surfaces of the membrane windings are levelled, such that the pores (3) located between the windings are reduced to a filtration-efficient separation of as little as 1 nm.

2. A process according to claim 1, characterized in that the membrane-windings (2) are wound under bias.

3. A process according to claim 1 or claim 2, characterized in that the diameter of the wire used in the membrane manufacture is so large that the feed may be moved through the membrane with a feed pressure of from 1 to >1000 bar.

4. A process according to any one of the preceding claims, characterized in that substances are inserted between the membrane windings (2) loosely in front of the membrane pores (3), which substances form a fine separating layer (4).

5. A process according to claim 4, characterized in that the fine separating layer (4) is formed and maintained during filtration by substances present in the feed or added therefrom.

6. A process according to claim 4, characterized in that the fine separating layer (4) is supplied to the membrane and deposited there in the form of a suspension, a transparent polymer film, interconnected microparticles of unitary size or a composite membrane with active separating layer.

7. A process according to claim 4, characterized in that to form the fine separating layer (4) there are used adsorbent material, e.g. activated carbon, material with a sieve effect, e.g. diatamaceous earth, material with defined pore size, e.g. zeolite, catalytically or enzymatically active substances, e.g. platinum, palladium or added enzymes.

## Revendications

1. Procédé pour la préparation d'une membrane pour microfiltration, ultrafiltration, per-évaporation ou osmose inverse de suspensions, émulsions ou bien pour séparations à l'état gazeux, dans lequel on utilise une membrane de forme cylindrique rubanée de fils, caractérisée en ce que l'on exerce axialement une pression élevée telle que définie dans la technique sur les spires (2) de la membrane, et en ce que l'on aplanit les irrégularités des surfaces des spires de la membrane de façon à réduire jusqu'à plus de 1 nm les pores (3) localisées entre les spires sur une distance à effet de filtre.

2. Procédé selon la revendication 1, caractérisé en ce que les spires (2) de la membrane sont enroulées sous précontrainte.

3. Procédé selon l'une des revendications 1 ou 2, caractérisé en ce que le diamètre du fil utilisé pour la préparation de la membrane est tel que le courant d'alimentation puisse s'écouler à travers la membrane sous une pression de refoulement de 1 à plus de 1000 bars.

4. Procédé selon l'une ou plusieurs des revendications précédentes, caractérisé en ce que des substances formant une fine couche de séparation (4) sont mises en place en vrac entre les spires (2) de la membrane devant les pores (3) de la membrane.

5. Procédé selon la revendication 4, caractérisé en ce que la fine couche de séparation (4) constituée de ces substances ajoutées ou de substances présentes dans le courant d'alimentation, est formée et maintenue pendant la filtration.

6. Procédé selon la revendication 4, caractérisé en ce que la fine couche de séparation (4) est amenée à la membrane sous forme d'une suspension, d'une pellicule transparente de polymère, de particules de taille homogène liées les unes aux autres ou bien d'une membrane composite présentant une couche active de séparation et y est déposée.

7. Procédé selon la revendication 4, caractérisé en ce que, pour la formation de la fine couche de séparation (4), on utilise un matériau adsorbant, par exemple du charbon actif, un matériau de type tamis, par exemple de la diatomite, un matériau à taille de pores bien définie, par exemple une zéolithe, des substances à activité catalytique ou enzymatique, par exemple du platine, du palladium ou bien des enzymes fixées sur un support.
